# EUROPÄISCHE PATENTSCHRIFT

(11) **EP 2 104 646 B1**
(45) Veröffentlichungstag und Bekanntmachung des Hinweises auf die Patenterteilung: **14.12.2016**
(21) Anmeldenummer: 08701461.9
(22) Anmeldetag: 14.01.2008
(51) Int. Cl.: C01G 49/00

(54) **VERFAHREN ZUR HERSTELLUNG EINER DAS ELEMENT EISEN IN OXIDISCHER FORM ENTHALTENDEN MULTIELEMENTOXIDMASSE**
METHOD FOR PRODUCING A MULTI-ELEMENT OXIDE MATERIAL CONTAINING THE ELEMENT IRON IN THE OXIDISED FORM
PROCÉDÉ DE PRODUCTION D'UNE MATIÈRE À BASE D'OXYDE MULTI-ÉLÉMENTS CONTENANT L'ÉLÉMENT FER DANS SA FORME OXYDÉE

(30) Priorität: 16.01.2007 DE 102007003076; 16.01.2007 US 885037 P
(43) Veröffentlichungstag der Anmeldung: 30.09.2009
(73) Patentinhaber: BASF SE, 67056 Ludwigshafen am Rhein (DE)
(72) Erfinder: RAICHLE, Andreas, 67063 Ludwigshafen (DE); BORCHERT, Holger, 67591 Offstein (DE); MÜLLER-ENGEL, Klaus, Joachim, 76297 Stutensee (DE); CREMER, Ulrich, 68161 Mannheim (DE)
(74) Vertreter: BASF IP Association
(86) Internationale Anmeldenummer: PCT/EP2008/050341
(87) Internationale Veröffentlichungsnummer: WO 2008/087115

(56) Entgegenhaltungen:
- EP-A- 1 080 781
- DE-A1-102005 035 978
- JP-A- 60 232 245
- US-A- 3 825 600
- US-A1- 2005 131 253

## Beschreibung

Vorliegende Erfindung betrifft ein Verfahren zur Herstellung einer das Element Eisen und wenigstens einen anderen von Sauerstoff verschiedenen elementaren Konstituenten in oxidischer Form enthaltenden Multielementoxidmasse, bei dem man mit Quellen der elementaren Konstituenten der Multielementoxidmasse ein die elementaren Konstituenten enthaltendes trockenes Gemisch als Vorläufermasse erzeugt und die Vorläufermasse als solche oder zu einem Formkörper geformt bei erhöhter Temperatur thermisch behandelt, wobei als Quelle für den elementaren Konstituenten Eisen eine wässrige Lösung von Eisennitrat mitverwendet wird.

Multielementoxidmassen, die das Element Eisen und wenigstens einen anderen von Sauerstoff verschiedenen elementaren Konstituenten in oxidischer Form enthalten, sind bekannt (vgl. z.B. US 2005/0131253 A1, US-A 3,825,600, EP-A 1080781 und DE-A 102005035978). Unter anderem werden sie als Aktivmasse für Katalysatoren verwendet, die heterogen katalysierte Gasphasenpartialoxidationen verschiedenster organischer Ausgangsverbindungen zu katalysieren vermögen (z.B. von Propylen zu Acrolein, von iso-Buten zu Methacrolein, von n-Butan zu Maleinsäureanhydrid, von Propylen zu Acrylnitril, oder von iso-Buten zu Methacrylnitril).

Unter einer vollständigen Oxidation einer organischen Verbindung mit molekularem Sauerstoff wird hier verstanden, dass die organische Verbindung unter reaktiver Einwirkung von molekularem Sauerstoff so umgesetzt wird, dass der in der organischen Verbindung insgesamt enthaltene Kohlenstoff in Oxide des Kohlenstoffs und der in der organischen Verbindung insgesamt enthaltene Wasserstoff in Oxide des Wasserstoffs umgewandelt wird. Alle davon verschiedenen Umsetzungen einer organischen Verbindung unter reaktiver Einwirkung von molekularem Sauerstoff werden hier als Partialoxidationen einer organischen Verbindunge zusammengefasst.

Im besonderen sollen hier unter Partialoxidationen solche Umsetzungen organischer Verbindungen unter reaktiver Einwirkung von molekularem Sauerstoff verstanden werden, bei denen die partiell zu oxidierende organische Verbindung nach beendeter Umsetzung wenigstens ein Sauerstoffatom mehr chemisch gebunden enthält als vor Durchführung der Partialoxidation (der Begriff der partiellen Oxidation soll in dieser Schrift auch die partielle Ammoxidation, d.h., eine partielle Oxidation im Beisein von Ammoniak, umfassen).

Dem Katalysatorbett kommt bei einer heterogen katalysierten partiellen Gasphasenoxidation die Aufgabe zu, zu bewirken, dass die gewünschte Gasphasenpartialoxidation gegenüber der vollständigen Oxidation bevorzugt abläuft. Die chemische Umsetzung erfolgt, wenn das Reaktionsgasgemisch das Katalysatorbett durchströmt während der Verweilzeit des Reaktionsgasgemisches in selbigem.

Üblicherweise sind die Reaktanten im Reaktionsgasgemisch durch ein sich im wesentlichen inert verhaltendes Verdünnungsgas verdünnt, dessen Bestandteile unter den Bedingungen der heterogen katalysierten Gasphasenpartialoxidation - jeder Bestandteil für sich betrachte - zu mehr als 95 mol-%, vorzugsweise zu mehr als 99 mol-% chemisch unverändert erhalten bleiben.

Die katalytisch aktive Oxidmasse kann neben Sauerstoff und Eisen lediglich ein anderes Element oder mehr als ein anderes Element enthalten (Multielementoxidmassen). Besonders häufig kommen als katalytisch aktive Oxidmassen solche zur Anwendung, die neben Eisen noch wenigstens ein anderes metallisches, insbesondere übergangsmetallisches, Element umfassen. In diesem Fall spricht man von Multimetalloxidmassen. Üblicherweise sind die Multielementoxidmassen (insbesondere die Multimetalloxidmassen) keine einfachen physikalischen Gemische von Oxiden der elementaren Konstituenten, sondern heterogene und/oder homogene Gemische von komplexen Polyoxiverbindungen dieser Elemente.

Die JP-A 60232245 offenbart ein Verfahren zur Herstellung eines monolytischen Katalysators, bei dem ein Gemisch aus Eisen- und Chromnitrathydrat zunächst geschmolzen und die resultierende Schmelze anschließend auf ein Substrat aufgezogen und getrocknet sowie calciniert wird.

Die Herstellung von Multielementoxidmassen erfolgt üblicherweise so, dass man mit geeigneten Quellen ihrer elementaren Konstituenten ein (vorzugsweise möglichst inniges sowie anwendungstechnisch zweckmäßig feinteiliges) ihrer Stöchiometrie entsprechend zusammengesetztes Trockengemisch erzeugt und dieses als solches oder zu einem Formkörper geformt bei erhöhter Temperatur (häufig 150 bis 650°C) thermisch behandelt.

Als Quellen für die elementaren Konstituenten der gewünschten Multielementoxidaktivmasse kommen dabei grundsätzlich solche Verbindungen in Betracht, bei denen es sich bereits um Oxide handelt und/oder um solche Verbindungen, die durch Erhitzen (thermisches Behandeln) in Oxide überführbar sind (wenigstens in Anwesenheit von gasförmigem molekularem Sauerstoff). Prinzipiell kann die Sauerstoffquelle aber auch z.B. in Form eines Peroxids Bestandteil des Vorläufergemisches sein.

Neben den Oxiden kommen als solche Quellen (Ausgangsverbindungen) vor allem Halogenide, Nitrate, Formiate, Oxalate, Citrate, Acetate, Carbonate, Aminkomplexe, Ammoniumsalze und/oder Hydroxide in Betracht. Verbindungen wie NH₄OH, (NH₄)₂CO₃, NH₄NO₃, NH₄CHO₂, CH₃COOH, NH₄CH₃CO₂ und/oder Ammoniumoxalat, die wie die vorgenannten Bestandteile beim thermischen Behandeln zu im wesentlichen gasförmig entweichenden Verbindungen zerfallen und/oder zersetzt werden könne, können in das Vorläufergernisch zusätzlich eingearbeitet werden.

Das Vorläufertrockengemisch (die trockene Vorläufermasse) kann zusätzlich feinteilige Verstärkungshilfsmittel wie Mikrofasern aus Glas, Asbest, Siliciumcarbid und/oder Kaliumtitanat zugesetzt enthalten. Auch Formungshilfsmittel wie z.B. Bornitrid, Graphit, Ruß, Polyethylenglycol, Stearinsäure, Stärke, Polyacrylsäure, Mineral- oder Pflanzenöl, Wasser, Bortrifluorid, Glycerin und Celluloseether können zugesetzt werden (vgl. z.B. Deutsche Schrift mit dem Aktenzeichen 102005037678.9).

Das, vorzugsweise innige, Vermischen der Ausgangsverbindungen (Quellen) zur Herstellung der trockenen Vorläufermasse erfolgt anwendungstechnisch zweckmäßig in nasser Form. Üblicherweise werden die Ausgangsverbindungen wenigstens teilweise in Form einer wässrigen Lösung und/oder Suspension miteinander vermischt. Als Lösungsmittel und/oder Suspendiermedium kommen aber auch von Wasser verschiedene Flüssigkeiten wie z.B. Methanol, Ethanol, iso-Butanol, Benzol, Diethylether und sonstige organische Lösungsmittel in Betracht.

Anschließend wird die nasse Zubereitung durch Trocknen sowie gegebenenfalls sich daran anschließendes Zerkleinern in ein Trockengemisch überführt, aus dem als solchem oder nach Formung zu einem Formkörper durch thermische Behandlung die Multielementoxidaktivmasse erzeugt wird.

Als Quelle für den elementaren Konstituenten Eisen wird im Rahmen der Herstellung von erfindungsgemäß relevanten Multielementoxidmassen in den Verfahren des Standes der Technik normalerweise Eisen(II)- und/oder Eisen(III)nitrat verwendet (die römische Ziffer gibt dabei den Oxidationszustand des Eisens wieder), und dies aus Gründen einer möglichst innigen Nassvermischung der verschiedenen zur Herstellung der Vorläufermasse zu verwendenden Quellen anwendungstechnisch bevorzugt als wässrige Lösung (z.B. US-A 3,825,600, US-2005/0131253 A1 und EP-A 1080781).

Die Herstellung der wässrigen Lösung des Eisennitrats erfolgt dabei dadurch, dass Eisen(II)nitrat (Fe(NO₃)₂), oder Eisen(III)nitrat (Fe(NO₃)₃), oder ein bei einer Temperatur von 25°C und einem Druck von 1 bar festes Hydrat der vorgenannten Eisennitrate (z.B. Fe(NO₃)₂ · 6H20, oder Fe(NO₃)₃ · 6H₂O, oder Fe(NO₃)₃ · 9H₂O, oder Fe(NO₃)₂ · 9H₂O oder ein Gemisch aus verschiedenen vorgenannten Salzen in Wasser, oder in einer wässrigen Lösung (diese kann bereits andere chemische Bestandteile gelöst enthalten)) aufgelöst wird.

Eine solche Verfahrensweise ist jedoch insbesondere dann nachteilig, wenn die Herstellung im großtechnischen Maßstab erfolgt. Dies ist vor allem darin begründet, dass Eisennitrate und ihre Hydrate hygroskopisch sind und deshalb zum Verklumpen neigen. Bei ihrer großtechnischen Lieferform handelt es sich daher in der Regel um grobstückige, vergleichsweise harte Brocken, von unregelmäßiger Größe. D.h., normalerweise handelt es sich um grobstückiges Gut, das eine kaum schüttfähige und somit nur begrenzt förderfreundliche Form aufweist, die aufgrund der Härte auch durch Zerkleinern nur vergleichsweise schwierig in eine solche überführt werden kann. Eine präzise Mengendosierung im Rahmen der Herstellung einer wässrigen Lösung ist im großtechnischen Maßstab deshalb vergleichsweise schwierig und häufig ungenau.

Die Aufgabe der vorliegenden Erfindung bestand daher darin, eine zur großtechnischen Herstellung wässriger Eisennitratlösungen besser geeignete Form des Eisennitrats zur Verfügung zu stellen, die einerseits vergleichsweise leicht zugänglich und andererseits sowohl in einfacher Weise zu fördern als auch punktgenau zu dosieren ist.

Demgemäß wurde ein Verfahren zur Herstellung einer das Element Eisen und wenigstens einen anderen von Sauerstoff verschiedenen elementaren Konstituenten in oxidischer Form enthaltenden Multielementoxidmasse, bei dem man mit Quellen der elementaren Konstituenten der Multielementoxidmasse ein die elementaren Konstituenten enthaltendes trockenes Gemisch als Vorläufermasse erzeugt und die Vorläufermasse als solche oder zu einem Formkörper geformt bei erhöhter Temperatur thermisch behandelt, wobei als Quelle für den elementaren Konstituenten Eisen eine wässrige Lösung von Eisennitrat mitverwendet wird, gefunden, das dadurch gekennzeichnet ist, dass die Herstellung der wässrigen Eisennitratlösung das Schmelzen eines bei einer Temperatur von 25°C und einem Druck von 1 bar im festen Aggregatzustand befindlichen Hydrats des Eisennitrats umfasst.

Grundlage der erfindungsgemäßen Verfahrensweise ist der Sachverhalt, dass der Schmelzpunkt von bei 25°C und einem Druck von 1 bar im festen Aggregatzustand befindlichen Hydraten des Eisennitrats bei Normaldruck (1 bar) vergleichsweise niedrig liegt. Gemäß CRC Handbook of Chemistry and Physics, CRC Press, Inc. Boca Raton, Florida, 64th Edition, 1984, liegt z.B. der Schmelzpunkt von Fe(NO₃)₂ · 6H₂O bei Normaldruck bei 60,5°C, derjenige von Fe(NO₃)₃ · 6H₂O bei 35°C und derjenige von Fe(NO₃)₃ · 9H₂O bei 47,2°C.

Durch Schmelzen der vorgenannten Hydrate des Eisennitrats bei vergleichsweise niederen Temperaturen (d.h., unter vergleichsweise schonenden Bedingungen) können somit in besonders einfacher Weise unmittelbar wässrige Lösungen von Eisennitrat erhalten werden. Solche wässrigen Lösungen sind darüber hinaus einfach zu fördern und können punktgenau dosiert werden. Sie können beispielsweise unmittelbar als solche erfindungsgemäß zu verwendende Quelle des Eisennitrats sein. Selbstverständlich kann ihnen aber auch z.B. jederzeit noch Wasser oder ein mit Wasser mischbares organisches Lösungsmittel (und/oder die Quelle eines oder mehrerer anderer elementarer Konstituenten der Multielementoxidmasse (gegebenenfalls in Lösung befindlich) hinzugefügt werden, bevor man sie als Eisennitratquelle im erfindungsgemäßen Verfahren einsetzt.

In anwendungstechnisch zweckmäßiger Weise wird man so vorgehen, dass man in einem doppelwandigen Behälter (Kessel) eine Schmelze des entsprechenden Eisennitrathydrats bei etwa Normaldruck befindlich vorlegt und durch den von den beiden Wänden eingeschlossenen Zwischenraum bei Bedarf warmes Wasser leitet (besteht kein solcher Bedarf, steht das Wasser im Zwischenraum). Zweckmäßigerweise ist dabei das Wasser an einem Warmwasserkreislauf angeschlossen. Die Temperatur des Kreislaufwassers liegt in der Regel oberhalb der Schmelztemperatur des Eisennitrathydrats (bevorzugt ≥ 10 °C oberhalb der Schmelztemperatur des Eisennitrats), normalerweise jedoch bei einem Wert ≤ 98 °C. Durch das Öffnen eines Regelventils in dem Warmwasserkreislauf wird bei Bedarf (d. h., wenn die Behälterinnentemperatur beginnt unter die Schmelztemperatur des Eisennitrathydrats zu fallen) warmes Wasser durch den von den beiden Wänden eingeschlossenen Zwischenraum geleitet, um wieder eine Behälterinnentemperatur einzuregeln, die gerade die entsprechende Schmelztemperatur des Eisennitrathydrats aufweist, wodurch die im Behälter befindliche Schmelze flüssig gehalten wird. Im Fall einer Schmelze des Fe(NO₃)₃ · 9H₂O würde die Behälterinnentemperatur so bei einem Wert von 60,5°C gehalten. Vorteilhaft befindet sich der die Schmelze (wässrige Eisennitratlösung) enthaltende Behälter auf einer Waage. Auf diese Weise kann anwendungstechnisch geschickt jederzeit die gewünschte Menge der Schmelze (der wässrigen Lösung) zur Verwendung im erfindungsgemäßen Verfahren abgelassen werden. Anschließend wird festes Eisennitrathydrat in die verbliebene Schmelze ergänzt und aufgeschmolzen, um so die wässrige Eisennitratlösung wieder aufzufüllen. Im übrigen ist der die Eisennitratschmelze enthaltende Behälter im wesentlichen geschlossen. Als Auslass für sich in geringfügigem Umfang gegebenenfalls bildende gasförmige Zersetzungsprodukte weist er in vorteilhafter Weise einen Anschluss mit vergleichsweise geringem Querschnitt an ein Abluftsystem auf. In der Regel wird vorgenannte Querschnittsfläche nicht mehr als 50 cm² betragen. Um ein Aufkonzentrieren der Lösung zu vermeiden, beträgt der Druck im Abluftsystem hierbei bevorzugt ≥ 950 mbar abs., besonders bevorzugt ≥ 980 mbar abs. und ganz besonders bevorzugt ≥ 995 mbar abs..

In der Regel wird dieser Druck jedoch nicht mehr als 1100 mbar absolut (abs.) betragen. Leichter Unterdruck gegenüber der Atmosphäre ist bevorzugt.

Insbesondere im Fall einer Fe(NO₃)₂ · 6H₂O-Schmelze wird man das Schmelzen vorteilhaft unter Inertgasatmosphäre durchführen. Als solche Inertgase können z.B. N₂, CO₂ und/oder Edelgase verwendet werden.

Erfindungsgemäß vorteilhaft wird das Nachschmelzen von festem Eisennitrathydrat in im doppelwandigen Behälter verbliebener Eisennitratschmelze unter Rühren erfolgen. Grundsätzlich kann aber auch von einem Rühren abgesehen werden. Üblicherweise wird man den exakten Fe-Gehalt des festen Eisennitrathydrats durch analytische Bestimmung an einer ersten aufgeschmolzenen Probemenge ermitteln. Diese analytische Bestimmung kann beispielsweise titrimetrisch (d. h. durch Maßanalyse) erfolgen.

Im übrigen kann beim erfindungsgemäßen Verfahren wie im Stand der Technik verfahren werden.

D.h., unter Mitverwendung der erfindungsgemäß erzeugten wässrigen Eisennitratlösung wird man die übrigen Ausgangsverbindungen der verschiedenen elementaren Konstituenten der gewünschten Multielementoxidmasse z.B. in Form einer wässrigen Lösung und/oder Suspension miteinander vermischen. Besonders innige Trockengemische werden dann erhalten, wenn ausschließlich von in gelöster Form vorliegenden Quellen der elementaren Konstituenten ausgegangen wird. Als Lösungsmittel (bzw. Dispergiermittel) wird vorzugsweise Wasser eingesetzt. Anschließend wird die erhaltene z.B. wässrige Masse getrocknet, wobei der Trocknungsprozess großtechnisch vorteilhaft durch Sprühtrocknung der z.B. wässrigen Mischung mit z.B. Austrittstemperaturen von 100 bis 150°C erfolgt. Grundsätzlich kann die Trocknung aber auch durch Gefriertrocknung, durch herkömmliches Eindampfen oder durch Filtration und anschließendes Erhitzen des Filterkuchens z.B. in einem Drehrohrofen erfolgen.

Die Stöchiometrie der erwünschten Multielementoxidmasse kann z.B. eine solche der allgemeinen Formel I sein, wie sie die EP-A 1080781 z.B. als Aktivmasse für eine heterogen katalysierte partielle Gasphasenoxidation von Propylen zu Acrolein empfiehlt,

Mo₁₂Bi_{b}Fe_{c}X¹_{d}X²ₑX³_{f}X⁴_{g}Oₙ (I),

und in der die Variablen folgende Bedeutung aufweisen:
- X¹ =: Ni und/oder Co,
- X² =: K, Na, Rb, Cs und/oder TI,
- X³ =: P, Nb, Mn, Ce, Te, W, Sb und/oder Pb,
- X⁴ =: Si, Al, Zr und/oder Ti,
- b =: 0,1 bis 10,
- c =: 0,1 bis 10,
- d =: 2 bis 20,
- e =: 0,001 bis 5,
- f =: 0 bis 5
- g =: 0 bis 30, und
- n =: eine Zahl, die durch die Wertigkeit und Häufigkeit der von Sauerstoff verschiedenen Elemente in I bestimmt wird.

Alternativ kann die Stöchiometrie der erwünschten Multielementoxidmasse auch eine solche der allgemeinen Formel II sein, wie sie die US 2005/0131253 generell als Aktivmasse für die heterogen katalysierte Partialoxidation eines Olefins zu einem ungesättigten Aldehyd empfiehlt:

Mo₁₂Bi_{b}Co_{c}Ni_{d}FeₑX¹_{f}X²_{g}X³ₕX⁴ⱼSiⱼOₙ (II),

und in der die Variablen folgende Bedeutung aufweisen:
- X¹ =: K, Na, Rb, Cs und/oder TI,
- X² =: P, B, As und/oder W,
- X³ =: Mg, Ca, Zn, Ce und/oder Sm,
- X⁴ =: F, C, Br und/oder J,
- b =: 0,5 bis 7,
- c =: 0 bis 10, mit der Maßgabe dass c+d = 0 bis 10,
- d =: 0 bis 10, mit der Maßgabe dass c+d = 0 bis 10,
- e =: 0,05 bis 3,
- f =: 0,0005 bis 3,
- g =: 0 bis 3,
- h =: 0 bis 1,
- i =: 0 bis 0,5,
- j =: 0 bis 40, und
- n =: eine Zahl, die durch die Wertigkeit und Häufigkeit der von Sauerstoff verschiedenen Elemente in II bestimmt wird.

Im besonderen umfasst das erfindungsgemäße Verfahren aber auch die Herstellung aller in der Schrift mit dem Aktenzeichen 102005037678.9 sowie in Research Disclosure 2005, 09, 497 (RD 2005-497012, 20050820) beschriebenen, das Element Eisen enthaltenden, Multielementoxidmassen. Dazu zählen insbesondere alle Multielementoxidmassen der allgemeinen Stöchiometrie III,

Mo₁₂Bi_{b}Fe_{c}X¹_{d}X²ₑX³_{f}X⁴_{g}Oₙ (III),

in der die Variablen folgende Bedeutung aufweisen:
- X¹ =: Ni und/oder Co,
- X² =: Thallium, ein Alkalimetall und/oder ein Erdalkalimetall,
- X³ =: Zn, P, As, B, Sb, Sn, Ce, Pb und/oder W,
- X⁴ =: Si, Al, Ti und/oder Zr,
- b =: 0,2 bis 5,
- c =: 0,01 bis 5,
- d =: 0 bis 10,
- e =: 0 bis 2,
- f =: 0 bis 8
- g =: 0 bis 10, und
- n =: eine Zahl, die durch die Wertigkeit und Häufigkeit der von Sauerstoff verschiedenen Elemente in III bestimmt wird.

D.h., im besonderen eignet sich das erfindungsgemäße Verfahren zur Herstellung von Multielementoxidmassen, die neben Sauerstoff und Eisen insbesondere noch die Elemente Bi und Mo enthalten. Dazu zählen im besonderen auch die Multimetalloxidaktivmassen, die in den Schriften DE-A 100 46 957, DE-A 44 07 020, EP-A 835, EP-A 575 897 und DE-C 33 38 380 beschrieben sind.

Des weiteren eignet sich das erfindungsgemäße Verfahren zur Herstellung von Multimetalloxidmassen, die neben Sauerstoff und Eisen insbesondere noch die Elemente V und P enthalten und als Aktivmasse für die heterogen katalysierte Partialoxidation von n-Butan zu Maleinsäureanhydrid geeignet sind. Die Stöchiometrie der Multielementoxidmasse kann dann z.B. eine solche der allgemeinen Formel IV sein,

V₁P_{b}Fe_{c}X¹_{d}X²ₑOₙ (IV),

in der die Variablen folgende Bedeutung aufweisen:
- X¹ =: Mo, Bi, Co, Ni, Si, Zn, Hf, Zr, Ti, Cr, Mn, Cu, B, Sn und/oder Nb,
- X² =: K, Na, Rb, Cs und/oder TI,
- b =: 0,9 bis 1,5,
- c =: 0,005 bis 0,1,
- d =: 0 bis 0,1,
- e =: 0 bis 0,1, und
- n =: eine Zahl, die durch die Wertigkeit und Häufigkeit der von Sauerstoff verschiedenen Elemente in IV bestimmt wird.

Die thermische Behandlung der trockenen Vorläufermasse und die Trocknung des nassen Gemischs der elementaren Konstituenten der angestrebten Multielementoxidmasse können selbstverständlich nahtlos ineinander übergehen.

Vorab der thermischen Behandlung kann die getrocknete Vorläufermasse bei Bedarf zerkleinert oder zu einem Formkörper geformt werden.

Die thermische Behandlung (Calcination), im Rahmen derer sich die gewünschte Multielementoxidaktivmasse aus der Vorläufermasse bildet, kann grundsätzlich sowohl unter Inertgasatmosphäre (z.B. H₂O, N₂, CO₂, Edelgas oder Gemische derselben), als auch unter oxidierender Atmosphäre (z.B. unter reinem molekularen Sauerstoff, oder unter einem Gemisch aus molekularem Sauerstoff und Inertgasen (z.B. Luft), sowie auch unter reduzierender Atmosphäre (z.B. Gemisch aus Inertgas, NH₃, CO und/oder H₂) erfolgen. Die Calcinationsdauer kann einige Minuten bis einige Stunden betragen und nimmt üblicherweise mit der Temperatur ab. Die Calcinationsatmosphäre kann sowohl stehen als auch fließen.

Die bei der Calcination resultierenden Multielementoxidaktivmassen können sowohl in Pulverform, als auch zu Formkörpern beliebiger Geometrie geformt (vgl. z.B. WO 02/062737) als Katalysatoren für Gasphasenpartialoxidationen (z.B. Propylen zu Acrolein, iso-Buten zu Methacrolein, Propylen zu Acrylnitril, iso-Buten zu Methacrylnitril, n-Butan zu Maleinsäureanhydrid, Butadien zu Maleinsäureanhydrid, Propan zu Acrolein und/oder Acrylsäure, iso-Butan zu Methacrolein und/oder Methacrylsäure) eingesetzt werden. Wie bereits erwähnt, kann die Formgebung vor oder nach der Calcination erfolgen. Beispielsweise können aus der Pulverform der Multimetalloxidaktivmasse oder ihrer uncalcinierten und/oder partiell calcinierten Vorläufermasse durch Verdichten zur gewünschten Katalysatorgeometrie (z.B. durch Extrudieren oder Tablettieren) kugelförmige, vollzylindrische oder ringförmige Vollkatalysatoren hergestellt werden, wobei gegebenenfalls Hilfsmittel wie z.B. Graphit oder Stearinsäure als Gleitmittel und/oder Formhilfsmittel und Verstärkungsmittel wie Mikrofasern aus Glas, Asbest, Siliciumcarbid oder Kaliumtitanat zugesetzt werden können.

Die Formgebung kann aber auch durch Aufbringen der Pulverform der Multimetalloxidaktivmasse oder ihrer uncalcinierten und/oder partiell calcinierten feinteiligen Vorläufermasse auf einen inerten Trägerkörper (z.B. kugelförmigen, zylinderförmigen oder ringförmigen) erfolgen, wobei das Aufbringen anwendungstechnisch zweckmäßig unter Mitverwendung eines flüssigen Bindemittels (z.B. Wasser, oder ein Gemisch aus Wasser und Glycerin) erfolgt. Die Längstausdehnung (längste direkte Verbindungslinie zweier auf der Oberfläche des Katalysatorformkörpers befindlicher Punkte) der resultierenden Katalysatorformkörper betragen in der Regel 1 bis 12 mm, häufig 2 bis 10 mm. Typische Calcinationstemperaturen liegen bei 150 bis 650°C, häufig bei 250 bis 550°C. In der Regel wird man die Calcinationstemperatur über die Calcinationsdauer variieren. Erfindungsgemäß bevorzugt sind Verfahren, die das Schmelzen von Eisen(III)nitrat-Hydraten umfassen (insbesondere von Fe(NO₃)₃ · 6H20 und von Fe(NO₃)₃ · 9H₂O; das letztere wird dabei aufgrund seiner geringer ausgeprägten Hygroskopie besonders bevorzugt).

Abschließend sei festgehalten, dass durch Schmelzen eines Gemischs verschiedener Eisennitrathydrate eine Schmelzpunkterniedrigung bewirkt werden kann.

Erfindungsgemäß vorteilhaft wird beim erfindungsgemäßen Verfahren als Quelle des elementaren Konstituenten Eisen ausschließlich eine wässrige Lösung von Eisennitrat verwendet, deren Herstellung das Schmelzen eines (bei 25°C, 1 bar) im festen Aggregatzustand befindlichen Hydrats des Eisennitrats umfasst.

Besonders vorteilhaft wird beim erfindungsgemäßen Verfahren als Quelle des elementaren Konstituenten Eisen ausschließlich die Schmelze eines (bei 25°C, 1 bar) in festem Aggregatzustand befindlichen Hydrats des Eisennitrats verwendet.

### Ausführungsbeispiel

Fe(NO₃)₃ · 9H20 der Fa. Dr. Paul Lohmann GmbH, D-31857 Emmerthal (13-14 Gew% Fe, < 0,2 Gew% Na, < 0,2 Gew% K, < 0,02 Gew% SO₄, < 0,01 Gew% Cl) wurde als kompakte, zylinderförmige Blöcke (etwa 40 cm Höhe und 30 cm Durchmesser) geliefert. In einem doppelwandigen Kessel aus Edelstahl (Hersteller Döring & Bäumer GmbH, Innenvolumen 0,2 m³) befanden sich 46 kg an Restschmelze von Fe(NO₃)₃ · 9H₂O, die durch dem Doppelwandzwischenraum bei Bedarf zufließendes Wasser bei einer Temperatur von 60,5°C unter leichtem Rühren flüssig gehalten wurde. Etwa 125 kg der Fe(NO₃)₃ · 9H20-Blöcke wurden über einen Brecher zunächst in ungleichförmige Grobstücke zerhackt, und dann zu der flüssigen Restschmelze gegeben. Anschließend wurde der doppelwandige Kessel bis auf seinen Abluftanschluss wieder verschlossen. Durch das geregelte Einleiten von 90°C warmem Wassers in und durch den Doppelmantel wurde die Temperatur im Innenraum des Behälters von 60,5°C beibehalten. Innerhalb von 3 h war das zugegebene Eisennitrathydrat vollständig geschmolzen. Eine anschließende titrimetrische Bestimmung des Eisengehalts der resultierenden wässrigen Eisennitratlösung ergab einen Eisengehalt von 13,8 Gew.-% Fe. Die Schmelze des Eisennitrathydrats war in einfacher Weise flüssig zu halten und konnte im Rahmen der großtechnischen Herstellung von Fe enthaltenden Multielementoxidmassen durch Ablassen von vorberechneten Gewichtsmengen (der doppelwandige Kessel befand sich auf einer Massenwaage) präzise dosiert werden. Nennenswerte Zersetzung des Fe(NO₃)₃ · 9H20 im Rahmen des Schmelzprozesses wurde nicht beobachtet.

### Herstellung einer trockenen Multimetalloxid (Mo₁₂Co₇Fe_{2,94}Bi_{0,6}Si_{1,59}K_{0,08}Oₙ)-Vorläufermasse

Bei 60°C wurden 319,5 kg Ammoniumheptamolybdattetrahydrat (81,5 Gew.-% MoO₃) in 900 I Wasser gelöst. In diese Lösung wurden unter Aufrechterhaltung der 60°C 1,46 kg einer 46,8 gew.-%igen wässrigen Kaliumhydroxidlösung von 20°C eingerührt (dabei wurde eine wässrige Lösung I erhalten).

Eine zweite wässrigen Lösung II wurde hergestellt, indem man unter Rühren zu 500,6 kg einer wässrigen Kobalt-(II)-nitratlösung (12,4 Gew.-% Co) bei 60°C 179,4 kg einer 60,5°C aufweisenden wässrigen Fe(NO₃)₃ 9H₂O-Schmelze (13,8 Gew.-% Fe) gab. Nach beendeter Zugabe wurde noch 30 min bei 60°C gerührt. Danach wurden bei 60°C 168,5 kg einer 20°C aufweisenden wässrigen Wismutnitratlösung (11,2 Gew.-% Bi) unter Erhalt der wässrigen Lösung II eingerührt. Innerhalb von 30 min wurde bei 60°C die Lösung II in die Lösung I eingerührt. 15 min nach beendetem Einrühren wurden bei 60°C 28,75 kg Kieselsol (der Fa. DuPont, Typ Ludox^{®}, 46,80 Gew.-% SiO₂, Dichte = 1,36 bis 1,42 g/cm³, pH = 8,5 bis 9,5, Alkaligehalt: max. 0,5 Gew.-%) in die erhaltene Maische gegeben. Unter Aufrechterhaltung der 60°C wurde noch 15 min nachgerührt. Dann wurde die erhaltene Maische im Gegenstromverfahren sprühgetrocknet (Gaseingangstemperatur: 400 ± 10°C, Gasausgangstemperatur: 140 ± 5°C) wobei als trockene Vorläufermasse ein Sprühpulver erhalten wurde, dessen Glühverlust (3 h bei 600°C unter Luft) 30 % seines Gewichts betrug. Die Körnung des Sprühpulvers betrug im wesentlichen einheitlich 30 µm.

### Herstellung eines Multimetalloxidvollkatalysators

Unter Zusatz von 3,5 Gew.-% Graphit vom Typ TIMREX T44, der Firma Timcal AG (CH-Bodio) wurde die Vorläufermasse zu ringförmigen Vollkatalysatorvorläuferformkörpern der ringförmigen Geometrie 5 mm x 3 mm x 2 mm (Außendurchmesser x Höhe x Innendurchmesser) geformt. Diese wurden anschließend unter Luft bei 500°C (9 h) zum gewünschten Multimetalloxidkatalysator calciniert. Dieser eignet sich als Katalysator für die heterogen katalysierte Gasphasenpartialoxidation von Propylen zu Acrolein.

US Provisional Patent Application No. 60/885037, eingereicht am 16.01.2007, ist eingefügt in die vorliegende Anmeldung durch Literaturhinweis.
Im Hinblick auf die obengenannten Lehren sind zahlreiche Änderungen und Abweichungen von der vorliegenden Erfindung möglich. Man kann deshalb davon ausgehen, dass die Erfindung, im Rahmen der beigefügten Ansprüche, anders als hierin spezifisch beschrieben, ausgeführt werden kann.

## Patentansprüche

1. Verfahren zur Herstellung einer das Element Eisen und wenigstens einen anderen von Sauerstoff verschiedenen elementaren Konstituenten in oxidischer Form enthaltenden Multielementoxidmasse, bei dem man mit Quellen der elementaren Konstituenten der Multielementoxidmasse ein die elementaren Konstituenten enthaltendes trockenes Gemisch als Vorläufermasse erzeugt und die Vorläufermasse als solche oder zu einem Formkörper geformt bei erhöhter Temperatur thermisch behandelt, wobei als Quelle für den elementaren Konstituenten Eisen eine wässrige Lösung von Eisennitrat mitverwendet wird, **dadurch gekennzeichnet, dass** die Herstellung der wässrigen Eisennitratlösung das Schmelzen eines bei einer Temperatur von 25°C und einem Druck von 1 bar im festen Aggregatzustand befindlichen Hydrats des Eisennitrats umfasst.

2. Verfahren nach Anspruch 1, **dadurch gekennzeichnet, dass** die wässrige Eisennitratlösung die Schmelze eines bei einer Temperatur von 25°C und einem Druck von 1 bar im festen Aggregatzustand befindlichen Hydrats des Eisennitrats ist.

3. Verfahren nach Anspruch 1 oder 2, **dadurch gekennzeichnet, dass** die wässrige Eisennitratlösung die einzige Quelle für den elementaren Konstituenten Eisen ist.

4. Verfahren nach einem der Ansprüche 1 bis 3, **dadurch gekennzeichnet, dass** das bei einer Temperatur von 25°C und einem Druck von 1 bar im festen Aggregatzustand befindliche Hydrat des Eisennitrats Fe(NO₃)₂ · 6H20, Fe(NO₃)₃ · 6H₂O und/oder Fe(NO₃)₃ · 9H₂O ist.

5. Verfahren nach einem der Ansprüche 1 bis 4, **dadurch gekennzeichnet, dass** die Multielementoxidmasse die Elemente Mo, Bi und Fe enthält.

6. Verfahren der heterogen katalysierten partiellen Gasphasenoxidation einer organischen Verbindung, **dadurch gekennzeichnet, dass** die katalytische Aktivmasse eine Multielementoxidmasse ist, die nach einem Verfahren gemäß einem der Ansprüche 1 bis 5 erhalten wurde.

7. Verfahren nach Anspruch 6, **dadurch gekennzeichnet, dass** die organische Verbindung Propylen oder iso-Buten ist.

8. Verwendung der Schmelze eines bei 25°C und einem Druck von 1 bar im festen Aggregatzustand befindlichen Hydrats von Eisennitrat zur Herstellung einer das Element Eisen und wenigstens einen anderen von Sauerstoff verschiedenen elementaren Konstituenten in oxidischer Form enthaltenden Multielementoxidmasse.

## Claims

1. A process for preparing a multielement oxide composition which comprises the element iron and at least one elemental constituent other than oxygen in oxidic form, in which sources of the elemental constituents of the multielement oxide compositions are used to obtain a dry mixture comprising the elemental constituents as a precursor composition, and the precursor composition, as such or shaped to a shaped body, is treated thermally at elevated temperature, the source used for the elemental constituent of iron being an aqueous solution of iron nitrate, wherein the preparation of the aqueous iron nitrate solution comprises the melting of a hydrate of iron nitrate which is in the solid state at a temperature of 25°C and a pressure of 1 bar.

2. The process according to claim 1, wherein the aqueous iron nitrate solution is the melt of a hydrate of iron nitrate which is in the solid state at a temperature of 25°C and a pressure of 1 bar.

3. The process according to claim 1 or 2, wherein the aqueous iron nitrate is the sole source of the elemental constituent of iron.

4. The process according to any of claims 1 to 3, wherein the hydrate of the iron nitrate which is in the solid state at a temperature of 25°C and a pressure of 1 bar is Fe(NO₃)₂ · 6H₂O, Fe(NO₃)₃ · 6H₂O and/or Fe(NO₃)₃ · 9H₂O.

5. The process according to any of claims 1 to 4, the multielement oxide composition comprises the elements Mo, Bi and Fe.

6. A process for heterogeneously catalyzed partial gas phase oxidation of an organic compound, wherein the catalytic active composition is a multielement oxide composition which has been obtained by a process according to any of claims 1 to 5.

7. A process according to claim 6, wherein the organic compound is propylene or isobutene.

8. The use of the melt of a hydrate of iron nitrate which is in the solid state at 25°C and a pressure of 1 bar for preparing a multielement oxide composition which comprises the element iron and at least one elemental constituent other than oxygen in oxidic form.

## Revendications

1. Procédé pour la préparation d'une masse d'oxyde d'éléments multiples contenant l'élément fer et au moins un autre constituant élémentaire différent de l'oxygène sous forme oxyde, dans lequel on génère, à l'aide de sources des constituants élémentaires de la masse d'oxyde d'éléments multiples, un mélange sec contenant les constituants élémentaires comme masse de précurseur et on traite thermiquement la masse de précurseur, telle quelle ou sous forme façonnée en un corps façonné, à température augmentée, une solution aqueuse de nitrate de fer étant utilisée conjointement comme source pour le constituant élémentaire fer, **caractérisé en ce que** la préparation de la solution aqueuse de nitrate de fer comprend la fusion d'un hydrate du nitrate de fer se trouvant sous forme d'agrégat solide à une température de 25°C et à une pression de 1 bar.

2. Procédé selon la revendication 1, **caractérisé en ce que** la solution aqueuse de nitrate de fer est la masse fondue d'un hydrate du nitrate de fer se trouvant sous forme d'agrégat solide à une température de 25°C et à une pression de 1 bar.

3. Procédé selon la revendication 1 ou 2, **caractérisé en ce que** la solution aqueuse de nitrate de fer est la seule source du fer en tant que constituant élémentaire.

4. Procédé selon l'une quelconque des revendications 1 à 3, **caractérisé en ce que** l'hydrate du nitrate de fer se trouvant sous forme d'agrégat solide à une température de 25°C et à une pression de 1 bar est Fe(NO₃)₂*6H₂O, Fe(NO₃)₃*6H₂O et/ou Fe(NO₃)₃*9H₂O.

5. Procédé selon l'une quelconque des revendications 1 à 4, **caractérisé en ce que** la masse d'oxyde d'éléments multiples contient les éléments Mo, Bi et Fe.

6. Procédé pour l'oxydation partielle en phase gazeuse, catalysée par voie hétérogène, d'un composé organique, **caractérisé en ce que** la masse active catalytique est une masse d'oxyde d'éléments multiples qui a été obtenue selon un procédé selon l'une quelconque des revendications 1 à 5.

7. Procédé selon la revendication 6, **caractérisé en ce que** le composé organique est le propylène ou l'isobutène.

8. Utilisation de la masse fondue d'un hydrate de nitrate de fer, se trouvant sous forme d'agrégat solide à 25°C et à une pression de 1 bar, pour la préparation d'une masse d'oxyde d'éléments multiples contenant l'élément fer et au moins un autre constituant élémentaire différent de l'oxygène sous forme oxyde.
